# EUROPÄISCHE PATENTANMELDUNG

(11) **EP 3 699 018 A1**
(43) Veröffentlichungstag der Anmeldung: **26.08.2020**
(21) Anmeldenummer: 20157089.2
(22) Anmeldetag: 13.02.2020
(51) Int. Cl.: B60L 50/11, B60L 50/61, B60K 6/46

(54) **ANTRIEBSEINRICHTUNG SOWIE VERFAHREN ZUM BETREIBEN EINER ANTRIEBSEINRICHTUNG**

(30) Priorität: 21.02.2019 DE 102019202334
(71) Anmelder: Audi AG, 85045 Ingolstadt (DE)
(72) Erfinder: Hartmann, Matthias, 85092 Kösching (DE); Maiwald, Stefan, 85055 Ingolstadt (DE)

(57) **Zusammenfassung**

Die Erfindung betrifft eine Antriebseinrichtung (1), mit einer als Generator betreibbaren ersten elektrischen Maschine (4) und einer als Motor betreibbaren zweiten elektrischen Maschine (8), die elektrisch miteinander verbunden sind, sodass die zweite elektrische Maschine (8) mit von der ersten elektrischen Maschine (4) bereitgestellter elektrischer Energie betreibbar ist, wobei ein Energiespeicher (10) zur Zwischenspeicherung von elektrischer Energie an die erste elektrische Maschine (4) und die zweite elektrische Maschine (8) elektrisch angeschlossen ist. Dabei ist vorgesehen, dass die erste elektrische Maschine (4) und die zweite elektrische Maschine (8) über einen Zwischenkreis (7) elektrisch unmittelbar miteinander verbunden sind, wobei der Energiespeicher (10) über eine Schalteranordnung (12) sowohl unmittelbar als auch mittelbar über einen Spannungswandler (11) an den Zwischenkreis (7) elektrisch angeschlossen ist. Die Erfindung betrifft weiterhin ein Verfahren zum Betreiben einer Antriebseinrichtung (1).

## Beschreibung

Die Erfindung betrifft eine Antriebseinrichtung, mit einer als Generator betreibbaren ersten elektrischen Maschine und einer als Motor betreibbaren zweiten elektrischen Maschine, die elektrisch miteinander verbunden sind, sodass die zweite elektrische Maschine mit von der ersten elektrischen Maschine bereitgestellter elektrischer Energie betreibbar ist, wobei ein Energiespeicher zur Zwischenspeicherung von elektrischer Energie an die erste elektrische Maschine und die zweite elektrische Maschine elektrisch angeschlossen ist. Die Erfindung betrifft weiterhin ein Verfahren zum Betreiben einer Antriebseinrichtung.

Aus dem Stand der Technik ist beispielsweise die Druckschrift WO 2015/079238 A2 bekannt. Diese beschreibt ein Hybridfahrzeug mit einer Batterie zum Betreiben von Mitteln zum Antreiben des Fahrzeugs, einen Motor/Generator mit einer Motor/Generatorwelle, und eine Brennkraftmaschine mit einer Ausgangswelle. Die Ausgangswelle ist mit der Motor/Generatorwelle über eine Freilaufkupplung verbunden. Die Freilaufkupplung ist derart angeordnet, dass sie es zulässt, dass der Motor/Generator schneller dreht als die Ausgangswelle, jedoch ein schnelleres Rotieren der Ausgangswelle als die Motor/Generatorwelle unterbindet. Das Hybridfahrzeug weist eine oder mehrere Nebenaggregate auf, die unmittelbar mit der Motor/Generatorwelle verbunden sind, sodass das eine Nebenaggregat oder die mehreren Nebenaggregate angetrieben werden, wenn sich die Motor/Generatorwelle dreht.

Es ist Aufgabe der Erfindung, eine Antriebseinrichtung vorzuschlagen, welche gegenüber bekannten Antriebseinrichtungen Vorteile aufweist, insbesondere eine hohe Flexibilität sowie eine hohe Effizienz der Antriebseinrichtung sicherstellt.

Dies wird erfindungsgemäß mit einer Antriebseinrichtung mit den Merkmalen des Anspruchs 1 erreicht. Dabei ist vorgesehen, dass die erste elektrische Maschine und die zweite elektrische Maschine über einen Zwischenkreis elektrisch unmittelbar miteinander verbunden sind, wobei der Energiespeicher über eine Schalteranordnung sowohl unmittelbar als auch mittelbar über einen Spannungswandler an den Zwischenkreis elektrisch angeschlossen ist.

Die Antriebseinrichtung dient beispielsweise dem Antreiben eines Kraftfahrzeugs, insoweit also dem Bereitstellen eines auf das Antreiben des Kraftfahrzeugs gerichteten Antriebsdrehmoments. Die Antriebseinrichtung ist also für ein Kraftfahrzeug vorgesehen und ausgebildet oder bildet einen Bestandteil des Kraftfahrzeugs. Entsprechend ist die Erfindung selbstverständlich auch auf ein Kraftfahrzeug mit der beschriebenen Antriebseinrichtung gerichtet.

Zum Bereitstellen des Antriebsdrehmoments weist die Antriebseinrichtung die erste elektrische Maschine und die zweite elektrische Maschine auf. Die erste elektrische Maschine ist als Generator vorgesehen und ausgebildet oder zumindest als Generator betreibbar. Die zweite elektrische Maschine ist hingegen als Motor vorgesehen und ausgebildet oder zumindest als Motor betreibbar. Die erste elektrische Maschine ist vorzugsweise mittels eines Antriebsaggregats antreibbar, wobei das Antriebsaggregat beispielsweise in Form einer Brennkraftmaschine vorliegt. Durch das Antreiben der ersten elektrischen Maschine stellt diese elektrische Energie bereit, welche zumindest zeitweise zum Betreiben der zweiten elektrischen Maschine herangezogen wird. Das Antriebsdrehmoment der Antriebseinrichtung wird insoweit von der zweiten elektrischen Maschine bereitgestellt.

Beispielsweise verfügt die Antriebseinrichtung über eine Abtriebswelle. Die zweite elektrische Maschine ist mit der Abtriebswelle gekoppelt, vorzugsweise starr und/oder permanent. Die erste elektrische Maschine ist hingegen antriebstechnisch beziehungsweise mechanisch von der Abtriebswelle entkoppelt. Das bedeutet, dass lediglich die zweite elektrische Maschine, nicht jedoch die erste elektrische Maschine, das Antriebsdrehmoment der Antriebseinrichtung bereitstellt, nämlich an der Abtriebswelle. Die Antriebseinrichtung liegt insoweit als serielle Antriebseinrichtung beziehungsweise als serielle Hybridantriebseinrichtung vor.

Die Abtriebswelle kann unmittelbar oder lediglich mittelbar über ein Getriebe, insbesondere ein Gangwechselgetriebe, mit wenigstens einer Radachse des Kraftfahrzeugs antriebstechnisch verbunden sein. An der Radachse liegt wenigstens ein angetriebenes Rad des Kraftfahrzeugs vor, welches an die zweite elektrische Maschine beziehungsweise die Abtriebswelle antriebstechnisch angeschlossen ist. Vorzugsweise steht die zweite elektrische Maschine beziehungsweise die Abtriebswelle unmittelbar mit der Radachse beziehungsweise dem wenigstens einen Rad der Radachse, in Wirkverbindung, nämlich bevorzugt starr und/oder permanent.

Es kann jedoch auch vorgesehen sein, dass antriebstechnisch zwischen der zweiten elektrischen Maschine beziehungsweise der Abtriebswelle einerseits und der Radachse beziehungsweise dem wenigstens einen Rad der Radachse das Getriebe, vorzugsweise das Gangwechselgetriebe vorliegt. Mithilfe des Getriebes wird eine Übersetzung zwischen der zweiten elektrischen Maschine beziehungsweise der zweiten elektrischen Maschine beziehungsweise der Abtriebswelle und der Radachse beziehungsweise ihrem Rad realisiert. Das Gangwechselgetriebe erlaubt darüber hinaus ein Wechseln der Übersetzung, insoweit also das Einstellen einer aus mehreren möglichen Übersetzungen ausgewählten Übersetzung.

Die erste elektrische Maschine und die zweite elektrische Maschine sind über den Zwischenkreis elektrisch aneinander angeschlossen. Hierbei sind sie über den Zwischenkreis unmittelbar miteinander verbunden, sodass also die erste elektrische Maschine elektrisch unmittelbar an die zweite elektrische Maschine angeschlossen ist. Das bedeutet, dass die erste elektrische Maschine und die zweite elektrische Maschine über eine durchgehende elektrische Verbindung, nämlich den Zwischenkreis, aneinander angeschlossen sind.

Zwischen der ersten elektrischen Maschine und der zweiten elektrischen Maschine liegen insoweit keine elektrischen oder elektronischen Bauteile vor. Insbesondere ist zwischen den beiden elektrischen Maschinen kein Spannungswandler, kein Energiespeicher oder dergleichen vorgesehen. Es ist also nicht, wie in anderen möglichen Ausgestaltungen der Antriebseinrichtung, vorgesehen, dass die beiden elektrischen Maschinen über einen Spannungswandler oder einen Energiespeicher elektrisch aneinander angeschlossen sind. Vielmehr ist die direkte und unmittelbare Verbindung zwischen ihnen über den Zwischenkreis hergestellt.

Allenfalls liegt zwischen der ersten elektrischen Maschine und der zweiten elektrischen Maschine eine Trenneinrichtung und/oder eine Messeinrichtung vor, die elektrische und/oder elektronische Bauteile aufweisen können. Die Trenneinrichtung dient dem Unterbrechen der elektrischen Verbindung zwischen der ersten elektrischen Maschine und der zweiten elektrischen Maschine. Sie liegt beispielsweise in Form einer Sicherung, eines Schützes oder dergleichen vor. Die Messeinrichtung dient zum Beispiel dem Messen einer Spannung und/oder einer Stromstärke des zwischen den beiden elektrischen Maschinen fließenden elektrischen Stroms.

Um ein flexibles Betreiben der Antriebseinrichtung zu ermöglichen, ist der Energiespeicher elektrisch an den Zwischenkreis angeschlossen. Der Energiespeicher dient dem Zwischenspeichern von elektrischer Energie und ermöglicht ein Betreiben der zweiten elektrischen Maschine auch dann, wenn die erste elektrische Maschine stillsteht oder weniger elektrische Energie bereitstellt als zum Betreiben der zweiten elektrischen Maschine benötigt wird. Der Energiespeicher ist sowohl unmittelbar als auch mittelbar über den Spannungswandler an den Zwischenkreis angeschlossen, in jedem Fall jedoch über die Schalteranordnung.

Mithilfe der Schalteranordnung kann ausgewählt werden, ob die elektrische Verbindung zwischen dem Energiespeicher und dem Zwischenkreis direkt und unmittelbar vorliegt oder über den Spannungswandler hergestellt sein soll. Beispielsweise ist also der Energiespeicher in einer ersten Schalteinstellung der Schalteranordnung unmittelbar, jedoch nicht über den Spannungswandler an den Zwischenkreis elektrisch angeschlossen. In einer zweiten Schalteinstellung hingegen ist der Energiespeicher über den Spannungswandler, jedoch nicht unmittelbar, mit dem Zwischenkreis elektrisch verbunden. Entsprechend kann mithilfe der Schalteranordnung der Zwischenkreis entweder unmittelbar mit einer Batteriespannung des Energiespeichers beaufschlagt werden oder alternativ mit einer von der Batteriespannung verschiedenen Wandlerspannung, die von dem Spannungswandler bereitgestellt wird.

Mit einer derartigen Ausgestaltung der Antriebseinrichtung kann zum einen ein äußerst hoher Wirkungsgrad erzielt werden, weil der Zwischenkreis mithilfe des Spannungswandlers stets mit einer passenden Spannung beaufschlagt werden kann. Andererseits werden unnötige Wandlungsverluste zumindest zeitweise vermieden, weil der Energiespeicher unter Umgehung des Spannungswandlers unmittelbar mit dem Zwischenkreis elektrisch verbindbar ist. Weiterhin ergibt sich durch die beschriebene Ausgestaltung der Antriebseinrichtung ein äußerst hoher Freiheitsgrad hinsichtlich der Ausgestaltung des Energiespeichers, beispielsweise hinsichtlich der Anzahl an in dem Energiespeicher verbauten Batteriezellen sowie deren Verschaltung.

Auch können die beiden elektrischen Maschinen auf definierte Spannungen ausgelegt werden, sodass sich ein Kosten- und Gewichtsvorteil ergibt. Schließlich ist es mithilfe der beschriebenen Ausgestaltung der Antriebseinrichtung möglich, den Energiespeicher an beliebigen Ladestationen aufzuladen, unabhängig von der Spannung, die von ihnen bereitgestellt wird. Mithilfe des Spannungswandlers kann nämlich eine Anpassung der Ladespannung an die Batteriespannung beziehungsweise umgekehrt erfolgen.

Eine weitere Ausführungsform der Erfindung sieht vor, dass ein Antriebsaggregat antriebstechnisch an die erste elektrische Maschine sowie wenigstens ein permanent mit der ersten elektrischen Maschine gekoppeltes Nebenaggregat angeschlossen ist. Das Antriebsaggregat liegt bevorzugt in Form einer Brennkraftmaschine vor. Mithilfe des Antriebsaggregates ist die erste elektrische Maschine antreibbar. Hierzu ist das Antriebsaggregat antriebstechnisch mit der ersten elektrischen Maschine gekoppelt oder zumindest koppelbar. Beispielsweise ist also das Antriebsaggregat unmittelbar an die erste elektrische Maschine antriebstechnisch angeschlossen oder alternativ lediglich mittelbar über eine Trennkupplung. Mithilfe der Trennkupplung ist das Antriebsaggregat wahlweise mit der ersten elektrischen Maschine koppelbar oder von ihr entkoppelbar.

Weiterhin verfügt die Antriebseinrichtung über das wenigstens eine Nebenaggregat. Das Nebenaggregat kann beispielsweise in Form einer weiteren elektrischen Maschine, einem Klimakompressor, einer Fluidpumpe, insbesondere einer Hydraulikpumpe oder dergleichen vorliegen. Das Nebenaggregat ist permanent mit der ersten elektrischen Maschine antriebstechnisch gekoppelt, sodass es stets angetrieben wird, falls die erste elektrische Maschine betrieben beziehungsweise angetrieben wird. Vorzugsweise wird das Nebenaggregat stets dann angetrieben, wenn die erste elektrische Maschine mithilfe des Antriebsaggregats angetrieben wird. In diesem Fall erfolgt das Antreiben des Nebenaggregats mithilfe des Antriebsaggregats.

Ist jedoch die vorstehend beschriebene Trennkupplung vorgesehen, so ist es bevorzugt vorgesehen, dass das Nebenaggregat auch bei geöffneter Trennkupplung, also bei von dem Antriebsaggregat entkoppelter erster elektrischen Maschine, angetrieben werden kann, nämlich durch Betreiben der ersten elektrischen Maschine als Motor, vorzugsweise unter Verwendung von in dem Energiespeicher zwischengespeicherter elektrischer Energie. Hierdurch ergibt sich ein besonders flexibler Betrieb der Antriebseinrichtung.

Eine weitere bevorzugte Ausgestaltung der Erfindung sieht vor, dass die erste elektrische Maschine und das wenigstens eine Nebenaggregat über eine Trennkupplung an das Antriebsaggregat antriebstechnisch angeschlossen sind. Hierauf wurde vorstehend bereits hingewiesen. Die Trennkupplung ist antriebstechnisch zwischen der ersten elektrischen Maschine und dem wenigstens einen Nebenaggregat einerseits und dem Antriebsaggregat andererseits angeordnet. Bei geschlossener Trennkupplung sind insoweit die erste elektrische Maschine und das Nebenaggregat mit dem Antriebsaggregat antriebstechnisch verbunden. Bei geöffneter Trennkupplung sind sie hingegen von dem Antriebsaggregat antriebstechnisch entkoppelt.

Unabhängig von der Schaltstellung der Trennkupplung sind jedoch die erste elektrische Maschine und das wenigstens eine Nebenaggregat miteinander antriebstechnisch verbunden, also starr und permanent. Die antriebstechnische Verbindung zwischen der ersten elektrischen Maschine und dem Nebenaggregat kann grundsätzlich beliebig hergestellt sein. Beispielsweise liegt sie über einen Zugmitteltrieb, beispielsweise einem kraftschlüssigen Zugmitteltrieb oder einen formschlüssigen Zugmitteltrieb, vor. Alternativ kann auch ein Zahnradgetriebe oder dergleichen vorgesehen sein. Die beschriebene Ausgestaltung der Antriebseinrichtung ermöglicht einen flexiblen und effizienten Betrieb des wenigstens einen Nebenaggregats.

Eine Weiterbildung der Erfindung sieht vor, dass ein erster Pol des Energiespeichers bei einer ersten Schalteinstellung der Schalteranordnung unmittelbar und bei einer zweiten Schaltstellung der Schalteranordnung mittelbar über den Spannungswandler mit einem ersten Pol des Zwischenkreises elektrisch verbunden ist. Der erste Pol des Energiespeichers und der erste Pol des Zwischenkreises beschreiben jeweils ein erstes Spannungsniveau. Beispielsweise liegen die ersten Pole als Pluspole vor. Auch eine Ausgestaltung als Minuspole kann jedoch vorgesehen sein.

In jedem Fall ist es jedoch vorgesehen, dass der erste Pol des Energiespeichers bei der ersten Schalteinstellung unmittelbar und unter Umgehung des Spannungswandlers mit dem ersten Pol des Zwischenkreises elektrisch verbunden ist. In der zweiten Schalteinstellung ist er hingegen lediglich mittelbar über den Spannungswandler, also nicht unmittelbar, mit dem ersten Pol des Zwischenkreises verbunden. Hierdurch kann der Energiespeicher entweder direkt oder über den Spannungswandler mit dem Zwischenkreis verbunden sein, wodurch die bereits erläuterten Vorteile erzielt werden.

Eine bevorzugte weitere Ausgestaltung der Erfindung sieht vor, dass die Schalteranordnung einen ersten Schalter und einen zweiten Schalter aufweist, wobei der erste Pol des Energiespeichers über den ersten Schalter unmittelbar und über den zweiten Schalter mittelbar über den Spannungswandler an den Zwischenkreis elektrisch angeschlossen ist. Die Anbindung des Energiespeichers an den Zwischenkreis entweder unmittelbar oder über den Spannungswandler erfolgt also durch entsprechendes Einstellen der beiden Schalter.

Vorzugsweise ist stets lediglich einer der beiden Schalter geschlossen und der jeweils andere der Schalter geöffnet. Mithilfe der Schalteranordnung wird insoweit verhindert, dass der Energiespeicher sowohl unmittelbar als auch über den Spannungswandler an den Zwischenkreis elektrisch angeschlossen ist. Der erste Schalter ist elektrisch zwischen dem ersten Pol des Energiespeichers und dem Zwischenkreis beziehungsweise seinem ersten Pol angeordnet. Der zweite Schalter ist hingegen elektrisch zwischen dem Spannungswandler und dem Zwischenkreis angeordnet. Hierdurch wird ein besonders flexibler Betrieb der Antriebseinrichtung erzielt.

Schließlich kann im Rahmen einer weiteren Ausgestaltung der Erfindung vorgesehen sein, dass ein zweiter Pol des Energiespeichers über den Spannungswandler permanent mit einem zweiten Pol des Zwischenkreises elektrisch verbunden ist. Die zweiten Pole weisen jeweils ein Spannungsniveau auf, welches von jenem der ersten Pole verschieden ist. Beispielsweise sind die zweiten Pole als elektrische Masse beziehungsweise als Minuspole oder als Pluspole ausgestaltet. Liegen die ersten Pole als Pluspole vor, so sind die zweiten Pole vorzugsweise Minuspole und umgekehrt. In jedem Fall verläuft die elektrische Verbindung zwischen den zweiten Polen jedoch über den Spannungswandler. Vorzugsweise sind sie über diesen jedoch unmittelbar miteinander verbunden, sodass die elektrische Verbindung zwischen den beiden Polen in dem Spannungswandler lediglich durchgeschleift ist. Das bedeutet, dass auch in dem Spannungswandler zwischen den beiden zweiten Polen keine elektrischen Bauteile oder elektronischen Bauteile vorliegen. Hierdurch wird die vorstehend beschriebene hohe Effizienz erzielt.

Die Erfindung betrifft weiterhin ein Verfahren zum Betreiben einer Antriebseinrichtung, insbesondere einer Antriebseinrichtung gemäß den Ausführungen im Rahmen dieser Beschreibung, wobei die Antriebseinrichtung über eine als Generator betreibbare erste elektrische Maschine und eine als Motor betreibbare zweite elektrische Maschine verfügt, die elektrisch miteinander verbunden sind, sodass die zweite elektrische Maschine mit von der ersten elektrischen Maschine bereitgestellter elektrischer Energie betreibbar ist, wobei ein Energiespeicher zur Zwischenspeicherung von elektrischer Energie an die erste elektrische Maschine und die zweite elektrische Maschine elektrisch angeschlossen ist.

Dabei ist vorgesehen, dass die erste elektrische Maschine und die zweite elektrische Maschine über einen Zwischenkreis elektrisch unmittelbar miteinander verbunden sind, wobei der Energiespeicher über eine Schalteranordnung sowohl unmittelbar als auch mittelbar über einen Spannungswandler an den Zwischenkreis elektrisch angeschlossen ist und für die Schalteranordnung aus mehreren Schalteinstellungen eine Schalteinstellung ausgewählt und an der Schalteranordnung eingestellt wird.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird.

Eine Weiterbildung der Erfindung sieht vor, dass bei einer Zwischenkreisspannung in dem Zwischenkreis, die kleiner oder gleich einer Sollspannung ist, die Schalteinstellung derart ausgewählt wird, dass der Energiespeicher unmittelbar mit dem Zwischenkreis elektrisch verbunden ist. Bei dieser Schalteinstellung wird die Spannung in dem Zwischenkreis durch die Batteriespannung des Energiespeichers gestützt. Aufgrund der Umgehung des Spannungswandlers wird ein besonders hoher Wirkungsgrad erzielt. Die Sollspannung kann auch als Referenzspannung bezeichnet werden. Sie wird beispielsweise einmalig definiert und ist insoweit konstant.

Eine weitere bevorzugte Ausführungsform der Erfindung sieht vor, dass bei einer Zwischenkreisspannung in dem Zwischenkreis, die größer als die Sollspannung ist, die Schalteinstellung derart ausgewählt wird, dass der Energiespeicher über den Spannungswandler mit dem Zwischenkreis elektrisch verbunden ist. Über den Spannungswandler wird insoweit die Batteriespannung herabgesetzt, insbesondere auf die Sollspannung. Hierdurch wird auf besonders effektive Art und Weise eine Anpassung der Spannung in dem Zwischenkreis, also der Zwischenkreisspannung, erzielt.

Schließlich kann im Rahmen einer weiteren Ausgestaltung der Erfindung vorgesehen sein, dass die Sollspannung anhand wenigstens einer der nachfolgenden Größen bestimmt wird: einem Betriebspunkt der Antriebseinrichtung, einem Betriebspunkt der ersten elektrischen Maschine, einem Betriebspunkt der zweiten elektrischen Maschine, einer Stromstärke eines durch den Zwischenkreis fließenden elektrischen Stroms und einer Stromstärke und/oder einer Spannung eines zum Aufladen des Energiespeichers verwendeten elektrischen Stroms. Beispielsweise wird die Sollspannung aus einem oder mehreren der Betriebspunkte mithilfe eines Verlustkennfelds bestimmt. Hierbei wird die Sollspannung derart gewählt, dass der Wirkungsgrad der Antriebseinrichtung insgesamt optimal ist. Als Eingangsgrößen für das Verlustkennfeld dient wenigstens einer der Betriebspunkte, vorzugsweise mehrere oder alle der Betriebspunkte.

Zusätzlich oder alternativ kann als Eingangsgröße ein Betriebspunkt des Spannungswandlers, eine Zustandsgröße des Energiespeichers und/oder eine Zustandsgröße der Schalteranordnung dienen. Zusätzlich oder alternativ kann die Stromstärke des elektrischen Stroms in dem Zwischenkreis Berücksichtigung bei der Ermittlung der Sollspannung finden. Dies gilt zusätzlich oder alternativ für die Spannung des zum Aufladen des Energiespeichers verwendeten elektrischen Stroms, welche auch als Ladespannung bezeichnet werden kann. Unter einem Betriebspunkt ist grundsätzlich beispielsweise eine Spannung und/oder eine Stromstärke eines elektrischen Stroms zu verstehen.

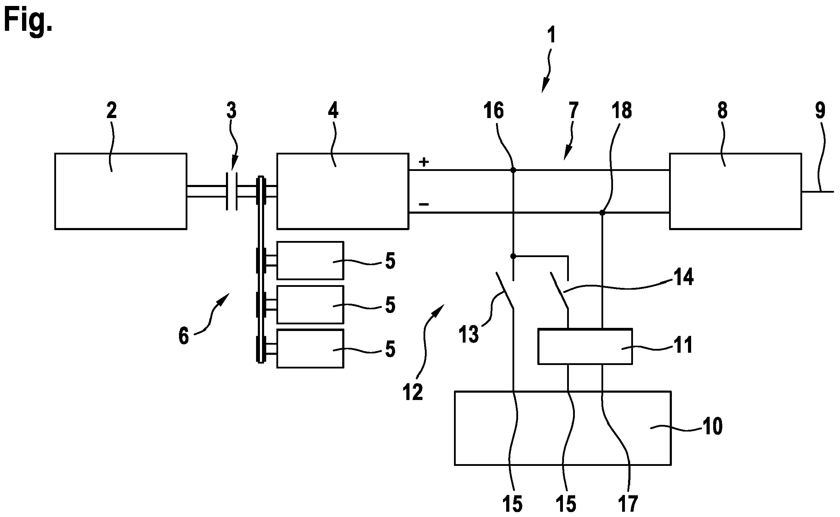

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung, insbesondere für ein Kraftfahrzeug.

Die Figur zeigt eine schematische Darstellung einer Antriebseinrichtung 1, wie sie insbesondere für ein Kraftfahrzeug Verwendung findet. Die Antriebseinrichtung 1 verfügt über ein Antriebsaggregat 2, beispielsweise eine Brennkraftmaschine, die über eine Trennkupplung 3 an eine erste elektrische Maschine 4 antriebstechnisch angeschlossen ist. Die erste elektrische Maschine 4 ist insbesondere als Generator betreibbar. Ebenfalls verfügt die Antriebseinrichtung 1 über wenigstens ein Nebenaggregat 5, in dem hier dargestellten Ausführungsbeispiel über mehrere Nebenaggregate 5. Diese sind jeweils mit der ersten elektrischen Maschine 4 antriebstechnisch gekoppelt, vorzugsweise permanent. Beispielsweise erfolgt die Kopplung des wenigstens einen Nebenaggregats 5 mit der ersten elektrischen Maschine 4 über einen Zugmitteltrieb 6. Liegen mehrere Nebenaggregate 5 vor, so sind diese bevorzugt über einen gemeinsamen Zugmitteltrieb 6 mit der ersten elektrischen Maschine 4 gekoppelt.

Die erste elektrische Maschine 4 ist über einen Zwischenkreis 7 elektrisch mit einer zweiten elektrischen Maschine 8 verbunden. Die zweite elektrische Maschine 8 dient der Bereitstellung eines Antriebsdrehmoments der Antriebseinrichtung 1, insbesondere an einer Antriebswelle 9. Jede der elektrischen Maschinen 4 und 8 verfügt - soweit notwendig - über ein Steuergerät, welches beispielsweise eine Leistungselektronik und/oder einen Wechselrichter aufweist. Ein solches Steuergerät kann entfallen, falls die elektrischen Maschinen 4 und 8 als Gleichstrommaschinen ausgestaltet sind. Bevorzugt liegen sie jedoch als Wechselstrom- oder Drehstrommaschinen vor, sodass das Steuergerät jeweils vorhanden ist.

Die Antriebseinrichtung 1 verfügt zusätzlich über einen Energiespeicher, der zur Zwischenspeicherung von elektrischer Energie vorgesehen und ausgebildet ist. Der Energiespeicher 10 ist sowohl unmittelbar als auch lediglich mittelbar über einen Spannungswandler 11 elektrisch an den Zwischenkreis 7 angeschlossen, nämlich über eine Schalteranordnung 12. Die Schalteranordnung 12 weist einen ersten Schalter 13 sowie einen zweiten Schalter 14 auf. Über den ersten Schalter 13 ist der Energiespeicher 10 unmittelbar an den Zwischenkreis 7 elektrisch angeschlossen, über den zweiten Schalter 14 mittelbar über den Spannungswandler.

Über den ersten Schalter 13 ist hierzu ein erster Pol 15 des Energiespeichers 10 mit einem ersten Pol 16 des Zwischenkreises 7 elektrisch verbunden beziehungsweise elektrisch verbindbar. In dem hier dargestellten Ausführungsbeispiel sind die ersten Pole 15 für die beiden Schalter 13 und 14 separat voneinander dargestellt. Vorzugsweise sind sie jedoch identisch. Es kann jedoch auch vorgesehen sein, dass die ersten Pole 15 des Energiespeichers 10 unterschiedliche Spannungsniveaus aufweisen, sodass also an den ersten Polen 15 unterschiedliche Spannungen des Energiespeichers 10 abgegriffen werden.

Ein zweiter Pol 17 des Energiespeichers 10 ist über den Spannungswandler 11 mit einem zweiten Pol 18 des Zwischenkreises 7 elektrisch verbunden, also beispielsweise nicht über die Schalteranordnung 12. Vorzugsweise ist der Spannungswandler 11 derart ausgebildet, dass die beiden zweiten Pole 17 und 18 innerhalb des Spannungswandlers 11 unmittelbar miteinander elektrisch in Verbindung stehen, sodass also zwischen den zweiten Polen 17 und 18 trotz des Durchschleifens durch den Spannungswandler 11 keine elektrischen oder elektronischen Bauteile vorliegen.

Die beschriebene Ausgestaltung der Antriebseinrichtung 1 ermöglicht ein besonders effizientes Betreiben der Antriebseinrichtung 1 und zudem eine hohe Flexibilität bei der Ausgestaltung der elektrischen Maschinen 4 und 8 sowie des Energiespeichers 10.

### BEZUGSZEICHENLISTE:

- 1: Antriebseinrichtung
- 2: Antriebsaggregat
- 3: Trennkupplung
- 4: 1. elektrische Maschine
- 5: Nebenaggregat
- 6: Zugmitteltrieb
- 7: Zwischenkreis
- 8: 2. elektrische Maschine
- 9: Antriebswelle
- 10: Energiespeicher
- 11: Spannungswandler
- 12: Schalteranordnung
- 13: 1. Schalter
- 14: 2. Schalter
- 15: 1. Pol
- 16: 1. Pol
- 17: 2. Pol
- 18: 2. Pol

## Patentansprüche

1. Antriebseinrichtung (1), mit einer als Generator betreibbaren ersten elektrischen Maschine (4) und einer als Motor betreibbaren zweiten elektrischen Maschine (8), die elektrisch miteinander verbunden sind, sodass die zweite elektrische Maschine (8) mit von der ersten elektrischen Maschine (4) bereitgestellter elektrischer Energie betreibbar ist, wobei ein Energiespeicher (10) zur Zwischenspeicherung von elektrischer Energie an die erste elektrische Maschine (4) und die zweite elektrische Maschine (8) elektrisch angeschlossen ist, **dadurch gekennzeichnet, dass** die erste elektrische Maschine (4) und die zweite elektrische Maschine (8) über einen Zwischenkreis (7) elektrisch unmittelbar miteinander verbunden sind, wobei der Energiespeicher (10) über eine Schalteranordnung (12) sowohl unmittelbar als auch mittelbar über einen Spannungswandler (11) an den Zwischenkreis (7) elektrisch angeschlossen ist.

2. Antriebseinrichtung nach Anspruch 1, **dadurch gekennzeichnet, dass** ein Antriebsaggregat (2) antriebstechnisch an die erste elektrische Maschine (4) sowie wenigstens ein permanent mit der ersten elektrischen Maschine (4) gekoppeltes Nebenaggregat (5) angeschlossen ist.

3. Antriebseinrichtung nach einem der vorhergehenden Ansprüche, **dadurch gekennzeichnet, dass** die erste elektrische Maschine (4) und das wenigstens eine Nebenaggregat (5) über eine Trennkupplung (3) an das Antriebsaggregat (2) antriebstechnisch angeschlossen sind.

4. Antriebseinrichtung nach einem der vorhergehenden Ansprüche, **dadurch gekennzeichnet, dass** ein erster Pol (15) des Energiespeichers (10) bei einer ersten Schalteinstellung der Schalteranordnung (12) unmittelbar und bei einer zweiten Schalteinstellung der Schalteranordnung (12) mittelbar über den Spannungswandler (11) mit einem ersten Pol (16) des Zwischenkreises (7) elektrisch verbunden ist.

5. Antriebseinrichtung nach einem der vorhergehenden Ansprüche, **dadurch gekennzeichnet, dass** die Schalteranordnung (12) einen ersten Schalter (13) und einen zweiten Schalter (14) aufweist, wobei der erste Pol (15) des Energiespeichers (10) über den ersten Schalter (13) unmittelbar und über den zweiten Schalter (14) mittelbar über den Spannungswandler (11) an den Zwischenkreis (7) elektrisch angeschlossen ist.

6. Antriebseinrichtung nach einem der vorhergehenden Ansprüche, **dadurch gekennzeichnet, dass** ein zweiter Pol (17) des Energiespeichers (10) über den Spannungswandler (11) permanent mit einem zweiten Pol (18) des Zwischenkreises (7) elektrisch verbunden ist.

7. Verfahren zum Betreiben einer Antriebseinrichtung (1), insbesondere einer Antriebseinrichtung (1) nach einem oder mehreren der vorhergehenden Ansprüche, wobei die Antriebseinrichtung (1) über eine als Generator betreibbare erste elektrische Maschine (4) und eine als Motor betreibbare zweite elektrische Maschine (8) verfügt, die elektrisch miteinander verbunden sind, sodass die zweite elektrische Maschine (8) mit von der ersten elektrischen Maschine (4) bereitgestellter elektrischer Energie betreibbar ist, wobei ein Energiespeicher (10) zur Zwischenspeicherung von elektrischer Energie an die erste elektrische Maschine (4) und die zweite elektrische Maschine (8) elektrisch angeschlossen ist, **dadurch gekennzeichnet, dass** die erste elektrische Maschine (4) und die zweite elektrische Maschine (8) über einen Zwischenkreis (7) elektrisch unmittelbar miteinander verbunden sind, wobei der Energiespeicher (10) über eine Schalteranordnung (12) sowohl unmittelbar als auch mittelbar über einen Spannungswandler (11) an den Zwischenkreis (7) elektrisch angeschlossen ist und für die Schalteranordnung (12) aus mehreren Schalteinstellungen eine Schalteinstellung ausgewählt und an der Schalteranordnung (12) eingestellt wird.

8. Verfahren nach Anspruch 7, **dadurch gekennzeichnet, dass** bei einer Zwischenkreisspannung in dem Zwischenkreis (7), die kleiner oder gleich einer Sollspannung ist, die Schalteinstellung derart ausgewählt wird, dass der Energiespeicher (10) unmittelbar mit dem Zwischenkreis elektrisch verbunden ist.

9. Verfahren nach einem der vorhergehenden Ansprüche, **dadurch gekennzeichnet, dass** bei einer Zwischenkreisspannung in dem Zwischenkreis, die größer als die Sollspannung ist, die Schalteinstellung derart ausgewählt wird, dass der Energiespeicher (10) über den Spannungswandler (11) mit dem Zwischenkreis (7) elektrisch verbunden ist.

10. Verfahren nach einem der vorhergehenden Ansprüche, **dadurch gekennzeichnet, dass** die Sollspannung anhand wenigstens einer der nachfolgenden Größen bestimmt wird: einem Betriebspunkt der Antriebseinrichtung (1), einem Betriebspunkt der ersten elektrischen Maschine (4), einem Betriebspunkt der zweiten elektrischen Maschine (8), einer Stromstärke eines durch den Zwischenkreis (7) fließenden elektrischen Stroms und einer Stromstärke und/oder einer Spannung eines zum Aufladen des Energiespeichers (10) verwendeten elektrischen Stroms.
